# EUROPEAN PATENT SPECIFICATION

(11) **EP 4 198 606 B1**
(45) Date of publication and mention of the grant of the patent: **12.03.2025**
(21) Application number: 21855810.4
(22) Date of filing: 07.06.2021
(51) Int. Cl.: G02B 26/08, G02B 26/10, G09G 3/02, G09G 3/34, G09G 3/20

(54) **CONTROL DEVICE, IMAGE FORMATION DEVICE, CONTROL METHOD, AND CONTROL PROGRAM**
STEUERUNGSVORRICHTUNG, BILDERZEUGUNGSVORRICHTUNG, STEUERUNGSVERFAHREN UND STEUERUNGSPROGRAMM
DISPOSITIF DE COMMANDE, DISPOSITIF DE FORMATION D'IMAGE, PROCÉDÉ DE COMMANDE ET PROGRAMME DE COMMANDE

(30) Priority: 12.08.2020 JP 2020136473
(43) Date of publication of application: 21.06.2023
(73) Proprietor: FUJIFILM Corporation, Tokyo 106-8620 (JP)
(72) Inventor: TANAKA, Nobuya, Ashigarakami-gun, Kanagawa 258-8577 (JP); SONODA, Shinichiro, Ashigarakami-gun, Kanagawa 258-8577 (JP); YOSHIZAWA, Hirotoshi, Ashigarakami-gun, Kanagawa 258-8577 (JP)
(74) Representative: HGF
(86) International application number: PCT/JP2021/021594
(87) International publication number: WO 2022/034731

(56) References cited:
- JP-A- 2004 302 104
- US-A1- 2004 218 155
- US-A1- 2004 218 155
- US-A1- 2015 286 048
- US-A1- 2018 281 107

## Description

### Technical Field

The present disclosure relates to a control device, an image forming apparatus, a control method, and a control program.

### Background Art

In general, as a method for scanning an electromagnetic wave for displaying an image, a Lissajous scanning method that covers a screen by performing a sinusoidal drive on both a horizontal axis and a vertical axis and drawing a Lissajous curve has attracted attention.

For example, in JP2005-526289A, a technology for forming an image by sweeping an image beam in accordance with the Lissajous curve is described. In addition, in JP2019-082634A, a technology for forming an image by scanning light in accordance with the Lissajous curve is described. US 2004/218155 A1 discloses a control device comprising at least one processor configured to, in a case where an electromagnetic wave which is spatially modulated according to a Lissajous curve is scanned and an intensity of the electromagnetic wave is time-modulated according to an image formed for each partial region divided from a scanning region of the electromagnetic wave to form the image, perform control of a region surrounded by a first straight line passing through a plurality of intersections which are continuous in a first direction and a second straight line passing through a plurality of intersections which are continuous in a second direction that intersects the first direction among a plurality of intersections of the Lissajous curve to be the partial region.

### SUMMARY OF INVENTION

### Technical Problem

In a Lissajous method, image quality of the formed image may deteriorate due to occurrence of unevenness or the like. In the technology described in JP2019-082634A, a technology of reducing image unevenness by reducing a density of scanning lines in a scanning region of light is described. However, the technology described in JP2019-082634A may not be sufficient to improve the image quality of the formed image in some cases.

The present disclosure has been made in view of the above-described circumstances, and provides a control device, an image forming apparatus, a control method, and a control program that are capable of improving the image quality of an image formed by an electromagnetic wave scanned in accordance with a Lissajous curve.

### Solution to Problem

A control device according to a first aspect of the present disclosure comprises at least one processor configured to, in a case where an electromagnetic wave which is spatially modulated according to a Lissajous curve is scanned and an intensity of the electromagnetic wave is time-modulated according to an image formed for each partial region divided from a scanning region of the electromagnetic wave to form the image, perform control of a region surrounded by a first straight line passing through a plurality of intersections which are continuous in a first direction and a second straight line passing through a plurality of intersections which are continuous in a second direction that intersects the first direction among a plurality of intersections of the Lissajous curve to be the partial region.

A second aspect of the present disclosure provides the control device according to the first aspect, in which the processor does not use a partial region provided at an end portion of the scanning region for forming the image.

A third aspect of the present disclosure provides the control device according to the first aspect, in which the processor collects a plurality of adjacent partial regions provided at an end portion of the scanning region to be treated as one partial region.

A fourth aspect of the present disclosure provides the control device according to the first or second aspect, in which the Lissajous curve passing through the partial region is one.

A fifth aspect of the present disclosure provides the control device according to any one of first to fourth aspects, in which the partial region has a rectangular shape.

In addition, an image forming apparatus according to a sixth aspect of the present disclosure comprises an output unit that outputs an electromagnetic wave, a spatial modulation unit that spatially modulates an angle or a position of the electromagnetic wave to be scanned according to a Lissajous curve based on a spatial modulation signal, a time modulation unit that time-modulates an intensity of the electromagnetic wave according to an image formed for each partial region divided from the scanning region of the electromagnetic wave based on a time modulation signal, and the control device according to the present disclosure.

A seventh aspect of the present disclosure provides the image forming apparatus according to the sixth aspect, which further comprises a correction unit that corrects a distortion of the electromagnetic wave on which the spatial modulation and the time modulation are performed.

A control method according to an eighth aspect of the present disclosure is a method executed by a processor, the method including, in a case where an electromagnetic wave which is spatially modulated according to a Lissajous curve is scanned and an intensity of the electromagnetic wave is time-modulated according to an image formed for each partial region divided from a scanning region of the electromagnetic wave to form the image, performing control of a region surrounded by a first straight line passing through a plurality of intersections which are continuous in a first direction and a second straight line passing through a plurality of intersections which are continuous in a second direction that intersects the first direction among a plurality of intersections of the Lissajous curve to be the partial region.

In addition, A control program according to a ninth aspect of the present disclosure is a program for causing a processor to execute a process including: in a case where an electromagnetic wave which is spatially modulated according to a Lissajous curve is scanned and an intensity of the electromagnetic wave is time-modulated according to an image formed for each partial region divided from a scanning region of the electromagnetic wave to form the image, performing control of a region surrounded by a first straight line passing through a plurality of intersections which are continuous in a first direction and a second straight line passing through a plurality of intersections which are continuous in a second direction that intersects the first direction among a plurality of intersections of the Lissajous curve to be the partial region.

### Advantageous Effects of Invention

According to the present disclosure, it is possible to improve the image quality of an image formed by an electromagnetic wave scanned in accordance with a Lissajous curve.

### BRIEF DESCRIPTION OF THE DRAWINGS

Fig. 1 is a configuration diagram showing an example of an image forming apparatus of an embodiment.
Fig. 2 is an explanatory diagram for explaining a partial region.
Fig. 3 is an explanatory diagram for explaining a comparative example.
Fig. 4 is a block diagram showing an example of the image forming apparatus of the embodiment.
Fig. 5 is a diagram for explaining an example of a relationship between a scanning region and an input image region.
Fig. 6 is a diagram for explaining a case where a plurality of partial regions are collectively treated as one partial region.
Fig. 7 is a diagram for explaining an example of how to provide grid lines.
Fig. 8 is a diagram for explaining a form in which a correction member is provided.

### DESCRIPTION OF EMBODIMENTS

Hereinafter, an embodiment of the present invention will be described in detail with reference to the drawings. In addition, each of the embodiments does not limit the present invention.

As an example, in the present embodiment, a form of applying the disclosed technology to an image forming apparatus that forms an image on a projection surface by scanning laser light using a Lissajous method will be described. The laser light of the present embodiment is an example of the electromagnetic wave of the present disclosure.

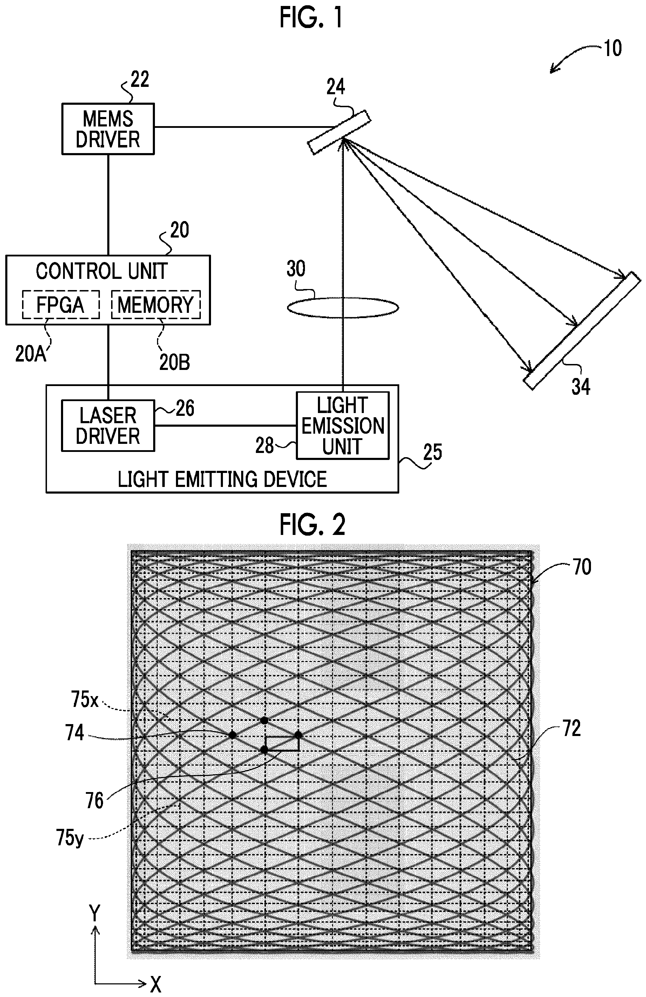

Fig. 1 shows an example of a configuration of an image forming apparatus 10 of the present embodiment. As shown in Fig. 1, the image forming apparatus 10 of the present embodiment comprises a control unit 20, a micro electro mechanical systems (MEMS) driver 22, a MEMS mirror 24, a laser driver 26, a light emitting device 25, a collimator 30, and a projection surface 34.

The light emitting device 25 includes a laser driver 26 and a light emission unit 28. The laser driver 26 of the present embodiment has a function of driving the light emission unit 28 based on a time modulation signal (details will be described later) generated by the control unit 20 and of outputting each laser light of R (R: Red), G (G: green), and B (B: Blue) for forming an image from the light emission unit 28. The light emitting device 25 of the present embodiment is an example of a time modulation unit of the present disclosure.

The laser light output from the light emission unit 28 is collimated by the collimator 30 and then reflected by the MEMS mirror 24 toward the projection surface 34.

The MEMS driver 22 drives the MEMS mirror 24 based on a spatial modulation signal (details will be described later) generated by the control unit 20. In the MEMS mirror 24, a reflecting surface that reflects the laser light is tilted independently with respect to the two axes of a horizontal direction (X direction) and a vertical direction (Y direction). In the present embodiment, the reflecting surface is tilted by the spatial modulation signal, so that the reflected laser light is scanned on the projection surface 34 in a state of drawing the Lissajous curve. The Lissajous curve is a curve that is decided by a frequency on the X-axis, a frequency on the Y-axis, and their phases. The MEMS driver 22 and the MEMS mirror 24 of the present embodiment are examples of a spatial modulation unit of the present disclosure. In addition, the X direction of the present embodiment is an example of a first direction of the present disclosure, and the Y direction of the present embodiment is an example of a second direction of the present disclosure.

In the present embodiment, the projection surface 34 is not limited to a surface of an actual object such as the screen and includes an imaginary plane in a space.

The control unit 20 of the present embodiment includes a field programmable gate array (FPGA) 20A and a non-volatile memory 20B that stores various information such as a control program executed by the FPGA 20A. The control unit 20 of the present embodiment is an example of the control device of the present disclosure.

The control unit 20 of the present embodiment performs control of a region surrounded by a straight line passing through a plurality of intersections which are horizontally continuous and a straight line passing through a plurality of intersections which are vertically continuous among the plurality of intersections of the Lissajous curve where the laser light is scanned to be a partial region that is a unit for forming an image on the projection surface 34. **In** other words, the control unit 20 of the present embodiment performs control to form an image with the partial region as a drawing unit surrounded by the straight line passing through the plurality of intersections which are horizontally continuous and the straight line passing through the plurality of intersections which are vertically continuous among the plurality of intersections of the Lissajous curve where the laser light is scanned.

Fig. 2 shows an example of a partial region in the present embodiment. **In** the example shown in Fig. 2, a partial region 76 in a scanning region 70 is a region surrounded by a grid line 75x passing through a plurality of intersections 74 which are continuous in the X direction and a grid line 75y passing through the plurality of intersections 74 which are continuous in the Y direction among the intersections 74 of the Lissajous curve 72 of the laser light. As shown in Fig. 2, the partial region 76 becomes larger as it approaches the center of the scanning region and becomes smaller as it approaches an end portion of the scanning region. **In** addition, as shown in Fig. 2, each partial region 76 is a rectangular region having two vertices on the diagonal line as intersections 74.

There is only one Lissajous curve 72 that passes through the partial region 76 of the present embodiment. That is, an image is formed in the partial region 76 by one emission of the laser light.

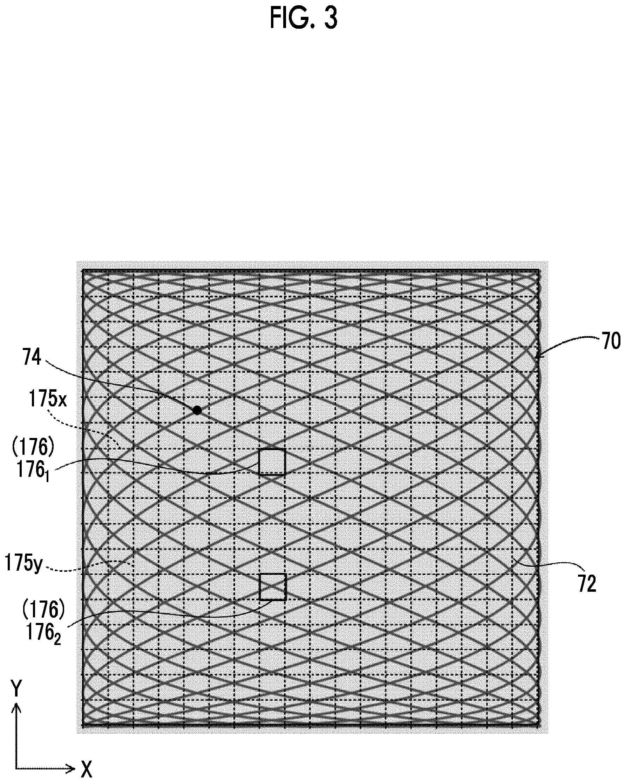

Fig. 3 shows, as a comparative example, an example of a partial region 176 decided without considering the intersection 74 of the Lissajous curve 72, unlike the present embodiment. **In** the example shown in Fig. 3, the partial region 176 surrounded by grid lines 175x and grid lines 175y arranged at equal intervals is shown. That is, in the example shown in Fig. 3, all the partial regions 176 have the same shape and the same size. **In** this case, a partial region 176 through which the Lissajous curve 72 does not pass is generated, such as a partial region 176₁. Since the Lissajous curve 72 does not pass through, the laser light is not scanned and does not emit light. Therefore, no image is formed in the partial region 176, so to speak, a dot loss state occurs. As described above, the number of partial regions 176 through which the Lissajous curve 72 does not pass increases as the number of grid lines 175x and 175y increases. In other words, the number of partial regions 176 through which the Lissajous curve 72 does not pass increases as the size of the partial regions 176 decreases. So to speak, as the resolution of the image formed on the projection surface 34 is higher, the dot loss increases.

In addition, in the example shown in Fig. 3, 176 through which a plurality of the Lissajous curves 72 pass is generated, such as a partial region 176₂. That is, since the laser light passes a plurality of times, the image corresponding to the partial region 176 is formed by emitting light a plurality of times. In this case, unless the amount of light of the projected laser light is controlled, the density of the image formed in the partial region 176 increases depending on the number of passages of the laser light, more specifically, the passage distance. On the other hand, in a case where the control is performed to make the amount of the laser light projected in each partial region 176 constant, the control is complicated.

In addition, in a case where the Lissajous curve 72 passing through the partial region 176 is short, that is, in a case where the distance of the laser light passing through the partial region 176 is short, the amount of light of the projected laser light per unit time should be increased. In addition, it is necessary that the light emission and quenching of the light emission unit 28 are performed in a short time, but it may not be possible to emit light with a sufficient amount of light depending on the specifications of the light emitting device 25.

In contrast to the comparative example shown in Fig. 3, as shown in Fig. 2 and as described above, in the image forming apparatus 10 of the present embodiment, the Lissajous curve 72 passes through all the partial regions 76 one by one. Therefore, the partial region 76 in which the image is not formed is not generated. Furthermore, in the image forming apparatus 10 of the present embodiment, a length of the Lissajous curve 72 passing through the partial region 76 can be made sufficiently long. That is, in the image forming apparatus 10 of the present embodiment, in a case of forming an image of each partial region 76, the light emission unit 28 only needs to emit light once, which facilitates control.

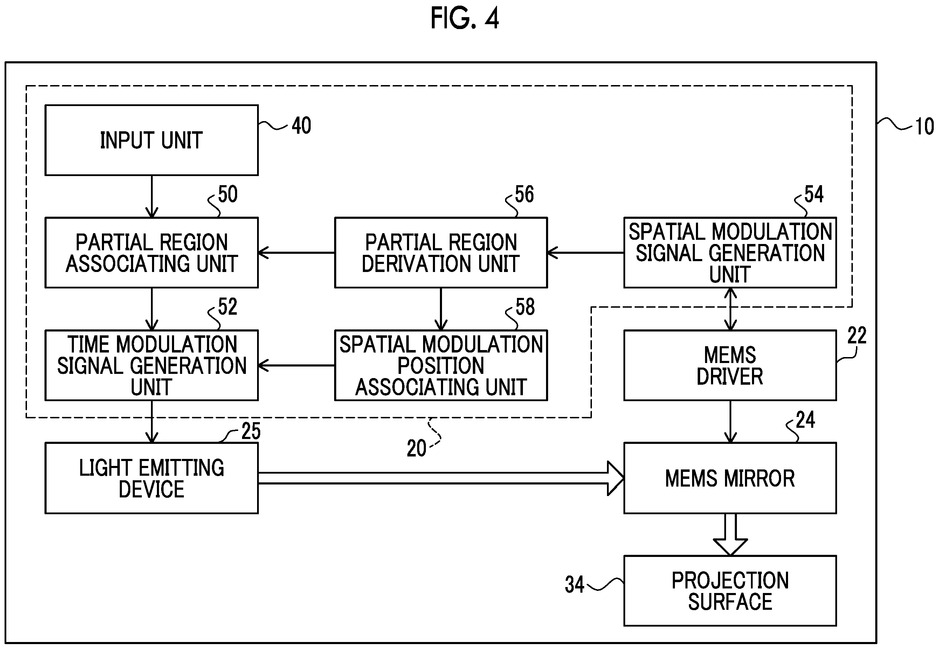

Fig. 4 shows a block diagram representing an example of the image forming apparatus 10 of the present embodiment. In Fig. 4, a functional block diagram representing an example of a functional configuration of the control unit 20 is included. As shown in Fig. 4, the control unit 20 of the present embodiment comprises an input unit 40, a partial region associating unit 50, a time modulation signal generation unit 52, a spatial modulation signal generation unit 54, a partial region derivation unit 56, and a spatial modulation position associating unit 58. As an example, in the control unit 20 of the present embodiment, by executing a control program stored in the memory 20B by the FPGA 20A, the FPGA 20A functions as the input unit 40, the partial region associating unit 50, the time modulation signal generation unit 52, and the spatial modulation signal generation unit 54, the partial region derivation unit 56, and the spatial modulation position associating unit 58.

Image data that represents the image to be formed is input into the input unit 40. Hereinafter, the image corresponding to the image data input into the input unit 40 may be referred to as an input image. As an example, in the present embodiment, the image data of color image having respective colors of R, G, and B is input into the input unit 40. The image data input into the input unit 40 is output to the partial region associating unit 50. The data input into the input unit 40 is not limited to the present embodiment and may be data corresponding to the image to be output (pattern). For example, the data may be binarized data that represents whether or not to output the laser light. **In** addition, for example, the data may be data that represents multiple values of an output amount.

The partial region associating unit 50 has a function of associating an input image corresponding to the image data input from the input unit 40 with the partial region 76. As an example, in the present embodiment, the input image input into the input unit 40 is projected onto the entire scanning region 70. Therefore, the input image is associated with the partial region 76 as a state in which the entire scanning region 70 and the input image match. More specifically, which partial region 76 a partial region obtained by dividing the input image into a plurality of parts corresponds to is associated.

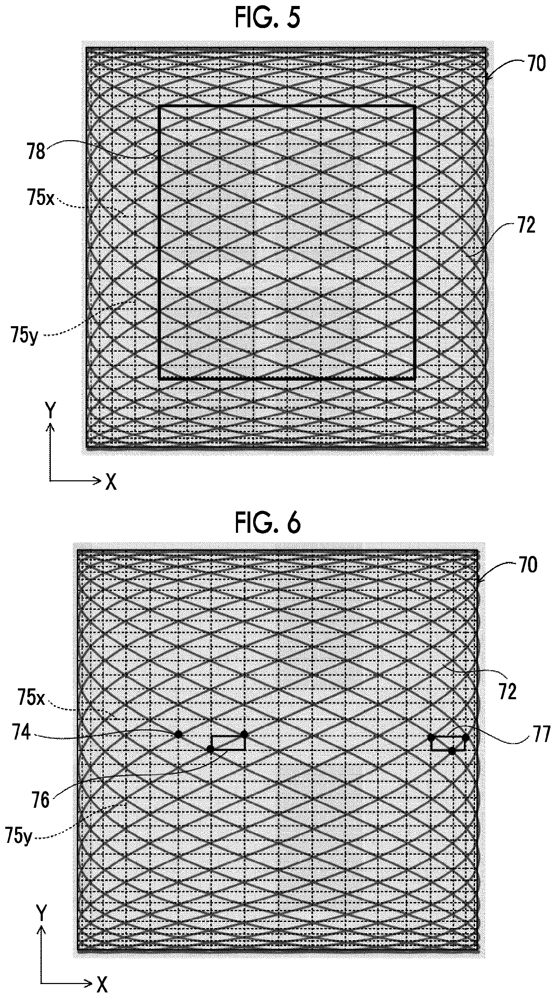

The present invention is not limited to the present embodiment, and the input image may be associated with a part of region in the scanning region 70. As described above, the partial region 76 becomes larger toward the center of the scanning region 70 and becomes smaller as it approaches the end portion of the scanning region 70. In addition, from the characteristics of the Lissajous curve 72, the shape of the partial region 76 becomes smaller as it is closer to the end portion of the scanning region 70, so that the partial region 76 is in a distorted state. Therefore, as an example shown in Fig. 5, a region formed by the partial region 76 in the central portion of the scanning region 70 may be an input image region 78. That is, the input image may not be projected onto the partial region 76 in the vicinity of the end portion of the scanning region 70. In this case, for example, information indicating the position of the input image region 78 with respect to the scanning region 70 may be stored in advance in the memory 20B of the control unit 20. The specific position of the input image region 78 or the like can be decided according to the density of the Lissajous curve 72, that is, the size of the partial region 76 or the like.

The specific method of associating the input image with the scanning region 70 is not particularly limited. For example, the pixels of the input image may be directly associated with each partial region 76. In addition, for example, by performing affine transformation or the like on the image data of the input image, the image data may be deformed according to the distortion of the above-described partial region 76 and then associated with each partial region 76.

In addition, the present invention is not limited to the present embodiment, and a plurality of adjacent partial regions 76 may be collectively treated as one partial region. In particular, as described above, since the partial region 76 becomes smaller toward the end portion of the scanning region 70, as in the example shown in Fig. 6, the partial regions 76 in the vicinity of the end portion of the scanning region 70 may be collectively treated as one partial region 77. In the example shown in Fig. 6, an example is shown in which two partial regions 76 are collected into one partial region 77. The number of the partial regions 76 to be collected is not particularly limited. For example, the partial regions 76 and 77 can be made uniform over the entire scanning region 70 by putting in a state in which the area is approximately the same as that of the partial region 76 located in the central portion of the scanning region 70, or in a state in which the lengths (laser light emission time) of the Lissajous curves 72 each passing through the partial regions 76 and 77 are approximately the same. In addition, in a case where the horizontal resolution is emphasized, the partial regions 76 arranged in the vertical direction may be collectively referred to as a partial region 77, and in a case where the vertical resolution is emphasized, the partial regions 76 arranged in the horizontal direction may be collectively referred to as a partial region 77.

The spatial modulation signal generation unit 54 generates a synchronizing signal for drawing the Lissajous curve 72 as a spatial modulation signal. As an example, in the present embodiment, a synchronizing signal synchronized with an input signal to the MEMS driver 22 is generated. The synchronizing method is not limited to the present embodiment, and may be synchronized with, for example, a sensor signal input from the MEMS mirror 24.

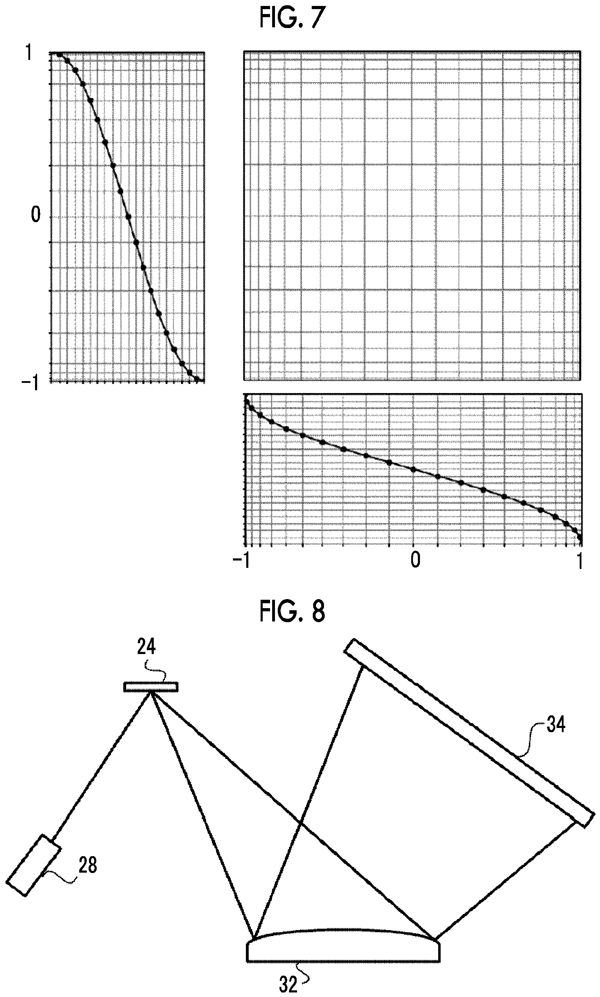

As described above, the partial region derivation unit 56 derives the region surrounded by the grid lines 75x and the grid lines 75y, which is derived from the intersections 74 of the Lissajous curve 72, as the partial region 76. The interval between the grid lines 75x and the grid lines 75y can be generated by cosθ (0 < θ < π) in a case where θ defining the Lissajous curve 72 is divided into equal intervals, as shown in Fig. 7. Here, θ is an arithmetical progression with an initial term of 0 and a tolerance of π/(n-1), where n is the number of lines in the grid.

The spatial modulation position associating unit 58 associates a position where the image data is rearranged, that is, a position of the partial region 76 according to the scanning order of the Lissajous curve 72. In the present embodiment, images are drawn in the partial regions 76 in the order in which the Lissajous curves 72 pass. The general image is arranged in order from the upper left partial region 76 to the right side by one partial region 76, and when it reaches the right end, it is arranged in order from the left end under one partial region 76. However, in the case of the Lissajous method, since the images of the partial regions 76 are not formed in such an order, the drawing positions are associated with each other in the drawing order of the Lissajous curve 72. The association information is output to the time modulation signal generation unit 52. The association information may be stored in advance in the memory 20B of the control unit 20 or the like as table information for conversion. In addition, the association information may be information for sequentially calculating the arrangement.

In a case where the laser light passes through the partial region 76, in order to form an image corresponding to the passing partial region 76, the time modulation signal generation unit 52 generates, as a time modulation signal, a signal of output intensity inversely proportional to the passing time through the partial region 76 at the timing of passing through the partial region 76 based on the association information input from the spatial modulation position associating unit 58.

The time modulation signal generated by the time modulation signal generation unit 52 is output to the light emitting device 25. In the light emitting device 25, the laser driver 26 causes the light emission unit 28 to emit light based on the time modulation signal as described above, and outputs the time-modulated laser light. The laser light is scanned according to the Lissajous curve 72 and an image is formed on the projection surface 34 by the MEMS driver 22 operating the MEMS mirror 24 based on the spatial modulation signal generated by the spatial modulation signal generation unit 54.

As described above, the control unit 20 of each embodiment described above comprises the FPGA 20A as at least one processor. The FPGA 20A performs the following control in a case where an image is formed by scanning the laser light spatially modulated according to the Lissajous curve 72 and time-modulating the intensity of the laser light according to the image formed for each partial region 76 divided from the scanning region 70 of the laser light. The FPGA 20A controls the region surrounded by grid lines 75x passing through the plurality of intersections 74 which are continuous in the X direction and grid lines 75y passing through the plurality of intersections 74 which are continuous in the Y direction intersecting with the X direction among the plurality of intersections 74 of the Lissajous curve 72 as the partial region 76.

According to the above configuration, since one Lissajous curve 72 passes through all the partial regions 76, it is possible to improve the image quality of an image formed by the laser light scanned according to the Lissajous curve 72.

As described above, from the characteristics of the Lissajous curve 72, so to speak, the Lissajous curve 72 is distorted toward the end portion of the scanning region. Therefore, the size of the partial region 76 is different between the vicinity and the end portion of the scanning region 70, so to speak, the image is in a distorted state. Therefore, a correction member that corrects the distortion of the image may be provided between the MEMS mirror 24 and the projection surface 34.

The correction member 32 shown in Fig. 8 corrects the distortion of the image by correcting the distortion of the Lissajous curve 72, in other words, the distortion of the laser light. The correction member 32 of the present embodiment is an example of the correction unit of the present disclosure. In Fig. 8, as an example of the correction member 32 for correcting the distortion, a case where an aspherical surface convex mirror is provided in which the central portion is close to a plane, the curvature is high only in the periphery, and the curvature becomes higher as it approaches the end portion. In the correction member 32 shown in Fig. 8, since the distortion of the laser light is corrected by spreading the light in the edge part where the curvature of the convex surface is high, the grid lines 75x and the grid lines 75y are at equal intervals. Therefore, the correction member 32 can correct the distortion of the image.

In addition, in the present embodiment, the embodiment in which the laser light is used as an example of the electromagnetic wave has been described, but the electromagnetic wave is not limited to the laser light. For example, other electromagnetic waves such as visible light and ultraviolet light may be used. In a case of applying to other electromagnetic waves, instead of the light emitting device 25, an electromagnetic wave generator such as a light emitting diode (LED), an electromagnetic gun such as a Braun tube, or the like may be used as an example of the time modulation unit. In addition, in a case of applying to other electromagnetic waves, instead of the MEMS driver 22 and the MEMS mirror 24, a deflection yoke (Braun tube) that generates a magnetic field or an electric field, a resonance pendulum, or the like may be used as an example of the spatial modulation unit.

In addition, the image drawn on the projection surface 34 may be an image invisible to humans, or may be, for example, a so-called latent image or the like.

In the present embodiment, the electromagnetic wave for forming the image has been described, but instead of the electromagnetic wave, a liquid such as an ink, a sound wave, or a particle may be handled.

In the above-described embodiment, the following various processors can be used as a hardware structure of processing units that execute various kinds of processing such as the input unit 40, the partial region associating unit 50, the time modulation signal generation unit 52, and the spatial modulation signal generation unit 54, the partial region derivation unit 56, and the spatial modulation position associating unit 58. The various processors include, as described above, a programmable logic device (PLD) that is a processor having a circuit configuration changeable after manufacturing such as the FPGA functioning as various processing units by executing software (program), a central processing unit (CPU) that is a general-purpose processor, a dedicated electric circuit that is a processor having a circuit configuration dedicatedly designed to execute specific processing such as an application specific integrated circuit (ASIC), and the like.

One processing unit may be composed of one of the various processors or may be composed of a combination of two or more processors of the same type or different types (for example, a combination of a plurality of FPGAs or a combination of a CPU and an FPGA). In addition, a plurality of processing units may be composed of one processor.

As an example where a plurality of processing units are configured of one processor, first, there is a form in which one processor is configured of a combination of one or more CPUs and software, and the processor functions as a plurality of processing units. As a second example, as represented by a system on chip (SoC) or the like, there is a form in which a processor that realizes the function of the entire system including the plurality of processing units by one integrated circuit (IC) chip is used. Accordingly, the various processing units are configured using one or more of the various processors as a hardware structure.

Furthermore, more specifically, an electric circuit (circuitry) in which circuit elements such as semiconductor elements are combined can be used as the hardware structure of the various processors.

In addition, in the embodiments described above, the aspect has been described in which the control program of the present disclosure is stored (installed) in advance in the memory 20B, but the disclosed technology is not limited to this. The control program may be provided in a form being recorded on a recording medium, such as a compact disc read only memory (CD-ROM), a digital versatile disc read only memory (DVD-ROM), or a universal serial bus (USB) memory. In addition, the control program may be downloaded from an external device through a network.

### Explanation of References

10: image forming apparatus
20: control unit, 20A: FPGA, 20B: memory
22: MEMS driver
24: MEMS mirror
25: light emitting device
26: laser driver
28: light emission unit
30: collimator
32: correction member
34: projection surface
40: input unit
50: partial region associating unit
52: time modulation signal generation unit
54: spatial modulation signal generation unit
56: partial region derivation unit
58: spatial modulation position associating unit
70: scanning region
72: Lissajous curve
74: intersection
75x, 75y, 175x, 175y: grid line
76, 77, 176, 176₁, 176₂: partial region
78: input image region
X, Y: direction

## Claims

1. A control device comprising:
at least one processor configured to:
in a case where an electromagnetic wave which is spatially modulated according to a Lissajous curve is scanned and an intensity of the electromagnetic wave is time-modulated according to an image formed for each partial region divided from a scanning region of the electromagnetic wave to form the image,
collect a plurality of adjacent partial regions provided at an end portion of the scanning region to be treated as one partial region; and
perform control of a region surrounded by a first straight line passing through a plurality of intersections which are continuous in a first direction and a second straight line passing through a plurality of intersections which are continuous in a second direction that intersects the first direction among a plurality of intersections of the Lissajous curve to be the partial region.

2. The control device according to claim 1, wherein the partial region has a rectangular shape.

3. An image forming apparatus comprising:
an output unit that outputs an electromagnetic wave;
a spatial modulation unit that spatially modulates an angle or a position of the electromagnetic wave to be scanned according to a Lissajous curve based on a spatial modulation signal;
a time modulation unit that time-modulates an intensity of the electromagnetic wave according to an image formed for each partial region divided from the scanning region of the electromagnetic wave based on a time modulation signal; and
the control device according claim 1 or 2.

4. The image forming apparatus according to claim 3, further comprising a correction unit that corrects a distortion of the electromagnetic wave on which the spatial modulation and the time modulation are performed.

5. A control method executed by a processor, the method comprising:
in a case where an electromagnetic wave which is spatially modulated according to a Lissajous curve is scanned and an intensity of the electromagnetic wave is time-modulated according to an image formed for each partial region divided from a scanning region of the electromagnetic wave to form the image,
collect a plurality of adjacent partial regions provided at an end portion of the scanning region to be treated as one partial region; and
performing control of a region surrounded by a first straight line passing through a plurality of intersections which are continuous in a first direction and a second straight line passing through a plurality of intersections which are continuous in a second direction that intersects the first direction among a plurality of intersections of the Lissajous curve to be the partial region.

6. A control program for causing a processor to execute a process comprising:
in a case where an electromagnetic wave which is spatially modulated according to a Lissajous curve is scanned and an intensity of the electromagnetic wave is time-modulated according to an image formed for each partial region divided from a scanning region of the electromagnetic wave to form the image,
collect a plurality of adjacent partial regions provided at an end portion of the scanning region to be treated as one partial region; and
performing control of a region surrounded by a first straight line passing through a plurality of intersections which are continuous in a first direction and a second straight line passing through a plurality of intersections which are continuous in a second direction that intersects the first direction among a plurality of intersections of the Lissajous curve to be the partial region.

## Patentansprüche

1. Steuervorrichtung, umfassend:
mindestens einen Prozessor, der so konfiguriert ist, dass er:
in einem Fall, in dem eine elektromagnetische Welle, die gemäß einer Lissajous-Kurve räumlich moduliert ist, abgetastet wird und eine Intensität der elektromagnetischen Welle gemäß einem Bild, das für jeden Teilbereich, der von einem Abtastbereich der elektromagnetischen Welle unterteilt ist, gebildet wurde, zeitmoduliert wird, um das Bild zu bilden,
mehrere benachbarte Teilbereichen, die an einem Endabschnitt des zu behandelnden Abtastbereichs vorgesehen sind, als einen Teilbereich sammelt; und
Steuerung eines Bereichs, der von einer ersten geraden Linie, die durch mehrere Schnittpunkte, die in einer ersten Richtung kontinuierlich sind, verläuft, und einer zweiten geraden Linie, die durch mehrere Schnittpunkte, die in einer zweiten Richtung, die die erste Richtung schneidet, kontinuierlich sind, verläuft, unter mehreren Schnittpunkten der Lissajous-Kurve umgeben ist, so durchführt, dass er der Teilbereich ist.

2. Steuervorrichtung nach Anspruch 1, wobei der Teilbereich eine rechteckige Form aufweist.

3. Bilderzeugungsvorrichtung, umfassend:
eine Ausgabeeinheit, die eine elektromagnetische Welle ausgibt;
eine Raummodulationseinheit, die einen Winkel oder eine Position der abzutastenden elektromagnetischen Welle gemäß einer Lissajous-Kurve auf der Grundlage eines Raummodulationssignals räumlich moduliert;
eine Zeitmodulationseinheit, die eine Intensität der elektromagnetischen Welle gemäß einem Bild, das für jeden Teilbereich, der von dem Abtastbereich der elektromagnetischen Welle unterteilt ist, gebildet ist, auf der Grundlage eines Zeitmodulationssignals zeitmoduliert; und
die Steuervorrichtung nach Anspruch 1 oder 2.

4. Bilderzeugungsvorrichtung nach Anspruch 3, ferner umfassend eine Korrektureinheit, die eine Verzerrung der elektromagnetischen Welle, an der die Raummodulation und die Zeitmodulation durchgeführt werden, korrigiert.

5. Steuerverfahren, das von einem Prozessor ausgeführt wird, wobei das Verfahren umfasst:
in einem Fall, in dem eine elektromagnetische Welle, die gemäß einer Lissajous-Kurve räumlich moduliert ist, abgetastet wird und eine Intensität der elektromagnetischen Welle gemäß einem Bild, das für jeden Teilbereich, der von einem Abtastbereich der elektromagnetischen Welle unterteilt ist, gebildet wurde, zeitmoduliert wird, um das Bild zu bilden,
Sammeln von mehreren benachbarten Teilbereichen, die an einem Endabschnitt des zu behandelnden Abtastbereichs vorgesehen sind, als einen Teilbereich; und Durchführen von Steuerung eines Bereichs, der von einer ersten geraden Linie, die durch mehrere Schnittpunkte, die in einer ersten Richtung kontinuierlich sind, verläuft,
und einer zweiten geraden Linie, die durch mehrere Schnittpunkte, die in einer zweiten Richtung, die die erste Richtung schneidet, kontinuierlich sind, verläuft, unter mehreren Schnittpunkten der Lissajous-Kurve umgeben ist, derart, dass er der Teilbereich ist.

6. Steuerprogramm zum Veranlassen eines Prozessors, einen Prozess auszuführen, der umfasst:
in einem Fall, in dem eine elektromagnetische Welle, die gemäß einer Lissajous-Kurve räumlich moduliert ist, abgetastet wird und eine Intensität der elektromagnetischen Welle gemäß einem Bild, das für jeden Teilbereich, der von einem Abtastbereich der elektromagnetischen Welle unterteilt ist, gebildet wurde, zeitmoduliert wird, um das Bild zu bilden,
mehrere benachbarte Teilbereichen, die an einem Endabschnitt des zu behandelnden Abtastbereichs vorgesehen sind, als einen Teilbereich sammelt; und
Durchführen von Steuerung eines Bereichs, der von einer ersten geraden Linie, die durch mehrere Schnittpunkte, die in einer ersten Richtung kontinuierlich sind, verläuft, und einer zweiten geraden Linie, die durch mehrere Schnittpunkte, die in einer zweiten Richtung, die die erste Richtung schneidet, kontinuierlich sind, verläuft, unter mehreren Schnittpunkten der Lissajous-Kurve umgeben ist, derart, dass er der Teilbereich ist.

## Revendications

1. Dispositif de contrôle comprenant :
au moins un processeur configuré pour :
dans un cas où une onde électromagnétique modulée spatialement selon une courbe de Lissajous est balayée et une intensité de l'onde électromagnétique est modulée temporelle selon une image formée pour chaque région partielle divisée à partir d'une région de balayage de l'onde électromagnétique pour former l'image,
collecter une pluralité de régions partielles adjacentes prévue à une partie d'extrémité de la région de balayage pour être traitées comme une seule région partielle ; et
effectuer du contrôle d'une région entourée par une première ligne droite passant par une pluralité d'intersections qui sont continues dans une première direction et une deuxième ligne droite passant par une pluralité d'intersections qui sont continues dans une deuxième direction qui croise la première direction, parmi une pluralité d'intersections de la courbe de Lissajous pour être la région partielle.

2. Dispositif de contrôle selon la revendication 1, dans lequel la région partielle a une forme rectangulaire.

3. Appareil de formation d'images comprenant :
une unité de sortie qui émet une onde électromagnétique ;
une unité de modulation spatiale qui module spatialement un angle ou une position de l'onde électromagnétique à balayer selon une courbe de Lissajous sur la base d'un signal de modulation spatiale ;
une unité de modulation temporelle qui module temporellement une intensité de l'onde électromagnétique selon une image formée pour chaque région partielle divisée à partir de la région de balayage de l'onde électromagnétique sur la base d'un signal de modulation temporelle ; et
le dispositif de contrôle selon la revendication 1 ou 2.

4. Appareil de formation d'images selon la revendication 3, comprenant en outre une unité de correction qui corrige une distorsion de l'onde électromagnétique sur laquelle la modulation spatiale et la modulation temporelle sont effectuées.

5. Procédé de contrôle exécuté par un processeur, le procédé comprenant :
dans un cas où une onde électromagnétique modulée spatialement selon une courbe de Lissajous est balayée et une intensité de l'onde électromagnétique est modulée temporelle selon une image formée pour chaque région partielle divisée à partir d'une région de balayage de l'onde électromagnétique pour former l'image,
collecter une pluralité de régions partielles adjacentes prévue à une partie d'extrémité de la région de balayage pour être traitées comme une seule région partielle ; et
effectuer le contrôle d'une région entourée par une première ligne droite passant par une pluralité d'intersections qui sont continues dans une première direction et une deuxième ligne droite passant par une pluralité d'intersections qui sont continues dans une deuxième direction qui croise la première direction parmi une pluralité d'intersections de la courbe de Lissajous pour être la région partielle.

6. Programme de contrôle à amener un processeur à exécuter un processus comprenant :
dans un cas où une onde électromagnétique modulée spatialement selon une courbe de Lissajous est balayée et une intensité de l'onde électromagnétique est modulée temporelle selon une image formée pour chaque région partielle divisée à partir d'une région de balayage de l'onde électromagnétique pour former l'image,
collecter une pluralité de régions partielles adjacentes prévue à une partie d'extrémité de la région de balayage pour être traitées comme une seule région partielle ; et
effectuer le contrôle d'une région entourée par une première ligne droite passant par une pluralité d'intersections qui sont continues dans une première direction et une deuxième ligne droite passant par une pluralité d'intersections qui sont continues dans une deuxième direction qui croise la première direction parmi une pluralité d'intersections de la courbe de Lissajous pour être la région partielle.
